(19) Europäisches Patentamt / European Patent Office / Office européen des brevets

(11) **EP 4 593 141 A1**

(12) **EUROPEAN PATENT APPLICATION**
published in accordance with Art. 153(4) EPC

(43) Date of publication:
**30.07.2025   Bulletin 2025/31**

(21) Application number: 24852358.1

(22) Date of filing: 08.08.2024

(51) International Patent Classification (IPC):
*H01M 10/0562* (2010.01)     *H01M 10/42* (2006.01)
*H01M 10/052* (2010.01)     *C01G 15/00* (2006.01)
*C01G 25/04* (2006.01)

(52) Cooperative Patent Classification (CPC):
**C01G 15/00; C01G 25/04; H01M 10/052;**
**H01M 10/0562; H01M 10/42;** Y02E 60/10

(86) International application number:
**PCT/KR2024/011762**

(87) International publication number:
**WO 2025/034005 (13.02.2025 Gazette 2025/07)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 08.08.2023   US 202363518260 P
05.09.2023   US 202318461166
07.08.2024   KR 20240105579

(71) Applicants:
• **LG Energy Solution, Ltd.**
**Seoul 07335 (KR)**
• **The Regents of the University of California**
**Oakland, CA 94607-5200 (US)**

(72) Inventors:
• **LEE, Jung Pil**
**Daejeon 34122 (KR)**
• **LEE, Jeongbeom**
**Daejeon 34122 (KR)**
• **SONG, Min Sang**
**Daejeon 34122 (KR)**
• **MENG, Ying Shirley**
**San Diego, California 92109 (US)**
• **CHEN, Zheng**
**San Diego, California 92130 (US)**
• **CHEN, Yu-Ting**
**La Jolla, California  92092 (US)**

(74) Representative: **Goddar, Heinz J.**
**Boehmert & Boehmert**
**Anwaltspartnerschaft mbB**
**Pettenkoferstrasse 22**
**80336 München (DE)**

(54) **METHOD FOR REGENERATING OR RECOVERING PERFORMANCE OF HALIDE-BASED SOLID ELECTROLYTE**

(57)     Methods for recovering the performance of a halide-based solid electrolyte are described. In one aspect, a halide-based solid electrolyte that has been exposed to air is subjected to a heat-treatment process, where the performance of the halide-based solid electrolyte is recovered, *e.g.,* the ionic conductivity obtained after heat treatment is recovered to a level similar to that before air exposure.

[Figure 1]

## Description

### Technical Field

This non-provisional application claims the benefit to U.S. Provisional Application No. 63/518,260, filed on August 8, 2023 and U.S. Non-Provisional Application No. 18/461,166, filed on September 5, 2023, and Korean patent application No. 10-2024-0105 579 filed on August 7, 2024.

The present disclosure relates to methods for renewing or recovering the performance of a halide-based solid electrolyte, as well as an all-solid-state battery comprising the halide-based solid electrolyte.

### Background

Lithium batteries have certain limitations in terms of capacity, safety, output, large size, and miniaturization of batteries. Thus, there continues to be a need for alternative battery technology, which address these shortcomings.

Some alternatives to lithium secondary batteries being researched include: a metal-air battery with a very large theoretical capacity in terms of capacity; an all-solid-state battery with no risk of explosion in terms of safety; a supercapacitor in terms of output; a NaS battery or a redox flow battery (RFB) in terms of large size; a thin film battery in terms of miniaturization.

In an all-solid-state battery, a liquid electrolyte (as used in conventional lithium secondary batteries) is replaced by a solid electrolyte. Thus, it is possible to avoid using a flammable solvent in the battery, and safety can be improved, e.g., by avoiding the risk of ignition or explosion due to the decomposition or reaction of the conventional electrolytic solution. In addition, since the all-solid-state battery may use Li metal or Li alloy as a negative electrode material, an all-solid-state battery has the advantage of dramatically improving energy density relative to a mass and volume of a battery.

However, because the all-solid-state battery uses a solid electrolyte, ionic conductivity may be reduced. In addition, when a liquid electrolyte is used together as a means to secure the ionic conductivity of the solid electrolyte, there is a problem in that the intensity is lowered.

In general, in order to prevent degradation of performance and processability of batteries while securing the safety of the all-solid-state battery, both the ionic conductivity and strength of the solid electrolyte should be maintained at a certain level.

However, there remains a need in the art for solid electrolytes that have both sufficient ionic conductivity and strength.

Among solid electrolytes, halide-based solid electrolytes have high oxidation stability, and thus, the demand for the halide-based solid electrolytes is increasing. However, the halide-based solid electrolytes are vulnerable to moisture compared to conventional sulfide-based solid electrolytes, and thus there is a problem in that the performance and processability of the batteries deteriorate.

Therefore, there is a need in the art to develop a technology for improving water resistance of a halide-based solid electrolyte, and/or recovering performance of the halide-based solid electrolyte exposed to moisture.

<u>Related Art Document</u>

Patent Document:

(Patent Document 1) Japanese Laid-open Patent Publication No. 2013-219017

### Technical Problem

As a result of various studies to solve the above problems, the present inventors have found that when a halide-based solid electrolyte (*e.g.,* $Li_3InCl_5$(LIC), *etc.*) is exposed to moisture-containing air and then heat-treated at a certain temperature, the heat treatment functions to restore the ionic conductivity that was lost due to the exposure to moisture. In an aspect, the ionic conductivity is recovered up to the level of ionic conductivity before the exposure to moisture.

Accordingly, an aspect of the present disclosure provides a method for recovering or renewing the performance of a halide-based solid electrolyte.

### Technical Solution

To achieve the above object, one aspect of the present disclosure provides a method for recovering the performance of a halide-based solid electrolyte including the steps of: (S1) providing a halide-based solid electrolyte that has been exposure to air; and (S2) heat-treating the halide-based solid electrolyte that has been exposed to the air.

In an embodiment of the present invention, the heat treatment may be performed at a temperature of 200°C to 400°C. In an aspect, the heat treatment may be performed at a temperature of 220°C to 380°C, a temperature of 250°C to 350°C, a temperature of 275°C to 325°C, or a temperature of 300°C to 350°C.

In an embodiment of the present invention, the heat treatment may be performed in ambient air. In an aspect, the heat treatment may be performed under an inert atmosphere.

In an embodiment of the present invention, the halide-based solid electrolyte may be a lithium halide-based solid electrolyte.

In an embodiment of the present invention, the lithium halide-based solid electrolyte may include at least one selected from the group consisting of $Li_3InCl_6$, $Li_2ZrCl_6$, and $Li_3YCl_6$.

In an embodiment of the present invention, in the method for recovering the performance of a halide-based solid electrolyte, the recovered performance includes ionic conductivity.

In an embodiment of the present invention, after the heat treatment, the ionic conductivity of the halide-based solid electrolyte may be recovered to 90% to 100% compared to the ionic conductivity before being exposed to the air (e.g., compared to the ionic conductivity of the pristine halide-based solid electrolyte).

**Advantageous Effects**

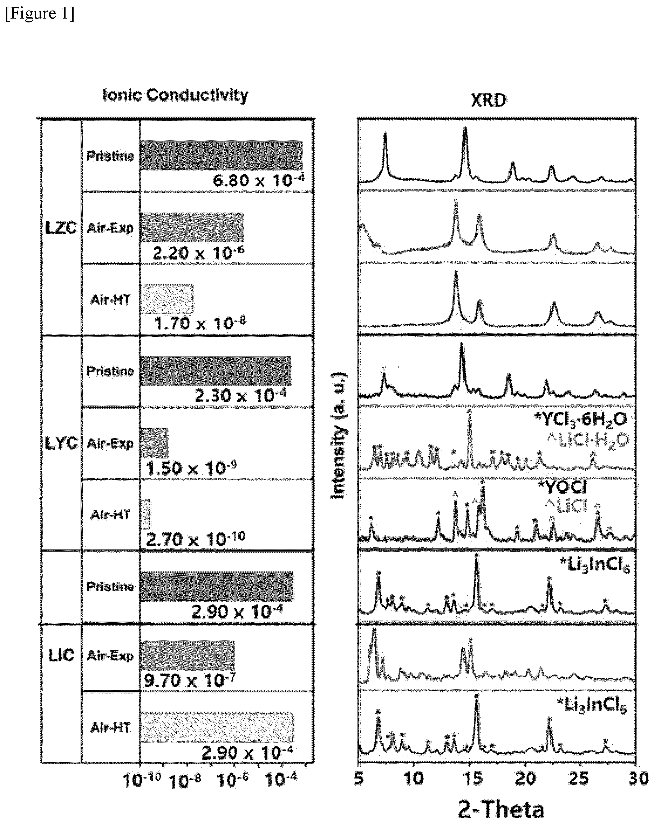

According to one aspect of the present disclosure, it is possible to recover the performance of a halide-based solid electrolyte by a heat treatment method. For instance, by heat-treating a halide-based solid electrolyte that has been exposed to moisture-containing air, the method makes it possible to recover the performance (e.g., to recover the ionic conductivity, *etc.*) of the halide-based solid electrolyte to a level equivalent to or higher than before the halide-based solid electrolyte was exposed to air and/or moisture. As shown in the Figure 1, the material (*i.e.,* the halide-based solid electrolyte) is recovered.

**Brief Description of Drawings**

The Figure 1 is a graph illustrating ionic conductivity measurement results and X-ray diffraction (XRD) analysis results for halide-based solid electrolytes exposed to air and then heat-treated in Examples 1, 6, and 7.

**Detailed Description**

Hereinafter, the present invention will be described in more detail to help the understanding of the present invention.

The term "halide-based solid electrolyte" includes an inorganic solid electrolyte that comprises a halide (e.g., fluoride, chloride, bromide, and iodide). In an aspect, the solid electrolyte does not comprise an oxide-based solid electrolyte or a sulfide-based solid electrolyte. In an embodiment of the present invention, the sulfide-based solid electrolyte may include one or more selected from the group consisting of LiPSX (X = Cl, Br or I), LiGePS, and LiPS. For example, the halide-based solid electrolyte may include one or more selected from the group consisting of $Li_3YBr_6$, $Li_3YCl_6$ and $Li_3YBr_2Cl_4$.

In some embodiments, the sulfide-based solid electrolyte particles comprise $Li_6PS_5Cl$.

However, the sulfide-based solid electrolyte is not limited thereto, and sulfide-based solid electrolytes commonly used in the art may be widely used.

For instance, in some embodiments, the sulfide-based solid electrolyte particles comprise a composite as shown Formula 1 or mixtures thereof:

[Formula 1]        $Li_aM_bA_cX_d$

wherein:

M is selected from P, Sn, Sb, As and Ge;
A is selected from S, Se and Te;
X is selected from Cl, Br and I; and
wherein $5 \leq a < 7.5$, $0.5 < b < 1.5$, $4 < c < 6$ and $0.5 < d < 2$.

In some embodiments, the halide-based solid electrolyte may be represented by Formula 2 below:

<Formula 2>        $Li_{6-3a}M_aBr_bCl_c$

wherein, M is a metal other than Li, a is $0 < a < 2$, b is $0 < b < 6$, c is $0 < c < 6$, and b + c=6. Preferably, M is selected from Sc, Y, B, Al, Ga and In, wherein $0<a<2$, $0<b<6$, $0<c<6$ and $b+c=6$.

As used in the specification, the term "air" refers to a moisture-containing environment, and is not limited by the amount of moisture, temperature or pressure, etc.

The term "pristine" may be understood as describing the condition of a halide-based solid electrolyte prior to exposure to air.

## Method for recovering performance of halide-based solid electrolyte

One aspect of the present disclosure relates to a method for recovering performance of a halide-based solid electrolyte. In an aspect, the performance includes ionic conductivity of the halide-based solid electrolyte.

According to one aspect of the present disclosure, a method for recovering performance of halide-based solid electrolyte includes: (S1) exposing a halide-based solid electrolyte to air, or providing a halide-based solid electrolyte after exposure to air, *e.g.,* where the performance of the halide-based solid electrolyte has decreased after air exposure; and (S2) heat-treating the halide-based solid electrolyte that had been exposed to the air. After the heat treatment, performance of the halide-based solid electrolyte is improved. For instance, in an aspect, the performance includes the ionic conductivity of the halide-based solid electrolyte.

In general, halide-based solid electrolytes are vulnerable to moisture, so, when exposed to moisture-containing air, the performance (including ionic conductivity) may deteriorate, e.g., due to a change in internal structure such as hydration, or oxidation of halide elements. When the halide-based solid electrolyte exposed to the air is heat treated, the halide-based solid electrolyte before being exposed to the air is formed again, and the performance including the ionic conductivity may be recovered. In an aspect, as shown in Table 1 below, the halide-based solid electrolyte which forms a hydrate without any oxide is easier to be recovered.

As shown in Table 1, in the case of LIC ($Li_3InCl_6$), $H_2O$ hydrate of LIC is formed when exposed to moisture or air, but the hydrate is removed during heat treatment and returns to original LIC. Thus, the ionic conductivity is recovered. However, in the case of LZC ($Li_2ZrCl_6$) or LYC ($Li_3InCl_6$), which does not form a simple hydrate of LZC or LYC, other by-products are formed and does not change to the original material even after heat treatment.

Table 1

| Electrolyte | Exposure | Heat Treatment |
|---|---|---|
| Pristine | Air Exposure | Heat Treatment in Air |
| $Li_2ZrCl_6$ | $LiCl + ZrO_2 + HCl$ | $LiCl + ZrO_2$ (350°C) |
| $Li_3YCl_6$ | $LiCl \cdot H_2O + YCl_3 \cdot H_2O$ | $LiCl + YOCl + 2\ HCl$ (550°C) |
| $Li_3InCl_6$ | $Li_3InCl_6 \cdot H_2O$ + a little HCl and $In_2O_3$ | $Li_3InCl_6$ + a little $In_2O_3$ (260°C) |

In an embodiment of the present invention, the heat treatment may be performed at a temperature of 200°C to 400°C.

Specifically, the heat treatment temperature may be 200°C or higher, 220°C or higher, or 240°C or higher, and may be 300°C or lower, 350°C or lower, or 400°C or lower. In certain aspects, the lower range may be 200°C or higher, 210°C or higher, 220°C or higher, 230°C or higher, 240°C or higher, 250°C or higher, 260°C or higher, 270°C or higher, 280°C or higher, 290°C or higher, 300°C or higher, 310°C or higher, 320°C or higher, 330°C or higher, 340°C or higher, or 350°C or higher. In certain aspects, the upper range may be 400°C or lower, 390°C or lower, 380°C or lower, 370°C or lower, 360°C or lower, 350°C or lower, 340°C or lower, or 325°C or lower.

In some aspects, when the heat treatment temperature is less than 200°C, components hydrated or oxidized by being exposed to air may not be formed as an original halide-based solid electrolyte, and ionic conductivity may not be recovered. When the heat treatment temperature exceeds 400°C, the process cost for recovering the ionic conductivity in air becomes expensive, and the halide-based solid electrolyte component transformed by exposure induces other side reactions, or the solid electrolyte itself is thermally decomposed, so the ionic conductivity may not be recovered either.

In an embodiment of the present invention, the heat treatment may be performed in the air. The air is not particularly limited as long as it is a moisture-containing environment.

In an embodiment of the present invention, the halide-based solid electrolyte may be a lithium halide-based solid electrolyte. In an aspect, the halide comprises a fluoride, chloride, bromide or iodide.

In an aspect, the method for recovering performance of a halide-based solid electrolyte by the heat treatment relate to a lithium halide-based solid electrolyte, among the halide-based solid electrolytes. The lithium halide-based solid electrolyte is exposed to air, and thus, chemical reaction products on the surface may have a greater tendency to originally form the lithium halide-based solid electrolyte by the heat treatment, which may be more advantageous for recovery of performance including ionic conductivity.

In an embodiment of the present invention, the lithium halide-based solid electrolyte includes at least one selected from the group consisting of $Li_3InCl_6$, $Li_2ZrCl_6$, and $Li_3YCl_6$.

In an embodiment of the present invention, the performance may be the ionic conductivity.

The method for recovering performance of a halide-based solid electrolyte according to an embodiment of the present invention is based on the principle of returning the change in structure of the halide-based solid electrolyte by exposure to air to a state similar to the original structure by the heat treatment, which may be advantageous for the recovery of the ionic conductivity which is highly related to the structure of the halide-based solid electrolyte.

In addition, as can be seen from the XRD results illustrated in the Figure 1, it can be seen that it has returned to the original material.

In an embodiment of the present invention, after the heat treatment, the ionic conductivity of the halide-based solid electrolyte may be recovered to a level of 90% to 100% compared to before being exposed to air, and specifically, recovered to a level of 90% or more, 93% or more, 95% or more, or 98% or more. The degree of recovery of the ionic conductivity may be proportional to the degree of recovery of the internal structure of the halide-based solid electrolyte.

## Examples

Hereinafter, preferred Example will be provided in order to assist in the understanding of the present invention. However, it will be obvious to those skilled in the art that the following Example is only an example of the present invention and various modifications and alterations may be made without departing from the scope and spirit of the present invention. In addition, it is natural that these modifications and alterations will fall within the following claims.

In the following Examples and Comparative Examples, a halide-based solid electrolyte, an air exposure process, and a heat treatment process as shown in Table 2 below were performed.

**Table 2**

| | Halide-based solid electrolyte | Air exposure | | Reaction | Ionic conductivity after being exposed to air (S/cm) | Heat treatment | | Ionic conductivity after heat treatment (S/cm) |
|---|---|---|---|---|---|---|---|---|
| | | Humidity (%) | Time (min) | Time (hr) | | Temperature (°C) | Time (hr) | |
| Example 1 | LIC ($Li_3InCl_6$) | 45 | 1 | 24 | $9.7 \times 10^{-7}$ | 260 | 8 | $2.9 \times 10^{-4}$ |
| Example 2 | LIC ($Li_3InCl_6$) | 45 | 1 | 24 | $9.7 \times 10^{-7}$ | 150 | 8 | $1.8 \times 10^{-6}$ |
| Example 3 | LIC ($Li_3InCl_6$) | 45 | 1 | 24 | $9.7 \times 10^{-7}$ | 450 | 8 | $2.7 \times 10^{-4}$ |
| Example 4 | LIC ($Li_3InCl_6$) | 45 | 1 | 12 | $1.5 \times 10^{-6}$ | 260 | 8 | $2.9 \times 10^{-4}$ |
| Example 5 | LIC ($Li_3InCl_6$) | 45 | 1 | 6 | $1.8 \times 10^{-6}$ | 260 | 8 | $2.9 \times 10^{-4}$ |
| Example 6 | LZC ($Li_2ZrCl_6$) | 45 | 1 | 24 | $2.2 \times 10^{-6}$ | 350 | 8 | $1.7 \times 10^{-8}$ |
| Example 7 | LYC ($Li_3YCl_6$) | 45 | 1 | 24 | $1.5 \times 10^{-9}$ | 550 | 8 | $2.7 \times 10^{-10}$ |
| Comparative Example 1 | LiPSCl ($Li_6PS_5Cl$) | 45 | 1 | 24 | $9.5 \times 10^{-7}$ | 260 | 8 | $2.6 \times 10^{-4}$ |

Example 1

A halide-based solid electrolyte, $Li_3InCl_6$ was exposed to air with a humidity of 45% for 1 minute and reacted for 24 hours.

$Li_3InCl_6$ exposed to and reacted with the air was heat-treated at 260°C for 8 hours.

Example 2

Example 2 was performed in the same manner as Example 1, except that the heat treatment temperature is 150°C.

Example 3

Example 3 was performed in the same manner as Example 1, except that the heat treatment temperature is 450°C.

Example 4

Example 4 was performed in the same manner as in Example 1, except that a reaction time after being exposed to air was set to 12 hours.

Example 5

Example 5 was performed in the same manner as in Example 1, except that a reaction time after being exposed to air was set to 6 hours.

Example 6

Example 6 was performed in the same manner as in Example 1, except that $Li_2ZrCl_6$ was used as a halide-based solid electrolyte and the heat treatment temperature was set to 350°C.

Example 7

Example 7 was performed in the same manner as in Example 1, except that $Li_3YCl_6$ was used as a halide-based solid electrolyte and the heat treatment temperature was set to 550°C. Comparative Example 1

Comparative Example 1 was performed in the same manner as in Example 1, except that $Li_6PS_5Cl$ was used as a sulfide-based solid electrolyte instead of the halide-based solid electrolyte. In aspects according to the invention, the term "halide-based" means comprising Sc, Y, B, Al, Ga and/or In as halide. For instance, Formula 1 is an example of a halide-based solid electrolyte.

Experimental Example 1: Measurement of degree of recovery of solid electrolyte membrane

In order to confirm the degree of recover of performance of a halide-based solid electrolyte exposed to air, the ionic conductivity was measured for the halide-based solid electrolyte before being exposed to air (Pristine), after air exposure (Air-Exp), and after heat treatment (Air-HT). X-ray diffraction (XRD) analysis was performed to analyze internal components of the halide-based solid electrolyte in each step. The ionic conductivity and the XRD analysis method are as follows.

**Measurement of ionic conductivity**

To measure the ionic conductivity of the solid electrolyte membrane, the solid electrolyte membrane was put in a polyether ether ketone (PEEK) holder with a diameter of 10 mm, and a titanium rod was used as a blocking electrode to measure the ionic conductivity.

After the resistance was measured at 25°C under conditions of an amplitude of 10 mV and a scan range of 1 Hz to 0.1 MHz by using an electrochemical impedance spectrometer (EIS, VM3, Bio Logic Science Instrument), the ionic conductivity of the solid electrolyte membrane was calculated by using the following Equation 1:

$$\sigma_i = \frac{L}{RA}$$

In the above Equation 1, $\sigma i$ denotes the ionic conductivity (mS/cm) of the solid electrolyte membrane, R denotes the resistance ($\Omega$) of the solid electrolyte membrane measured by the electrochemical impedance spectrometer, L denotes the thickness ($\mu$m) of the solid electrolyte membrane, and A denotes the area ($cm^2$) of the solid electrolyte membrane.

**XRD analysis**

XRD analysis was performed by measuring 2-Theta every 0.01° from 5° to 40° under conditions of Mo Ka radiation (wavelength: 0.70926 Å) by using a Bruker APEX II XRD (voltage: 40 Kv, current: 40 mA). Measurement samples were sampled in a state sealed with boron-rich glass in an Ar-filled glove box to prevent exposure to air.

Table 1 shows the changes in components of halide-based solid electrolytes, which are exposed to air and then heat-treated in Examples 1, 6 and 7, in Chemical Formula.

Referring to Table 1, in Example 1 (LIC, $Li_3InCl_6$), it could be seen that $In_2O_3$ was formed by oxidizing In while the LIC was hydrated in the step after exposed to the air (Air-Exp), but in the step after the heat treatment (Air-HT), the hydrated LIC became the original LIC.

In addition, in Example 6 (LZC, $Li_2ZrCl_6$), it could be seen that Zr was oxidized in the step after exposed to the air (Air-Exp) to form $ZrO_2$ and HCl, and in the step after the heat treatment (Air-HT), only HCl was removed, but the original LZC was not formed. As a result, it is difficult to recover the ionic conductivity.

In addition, in Example 7 (LZC, $Li_2ZrCl_6$), it could be seen that LYC was hydrated in the step after exposed to the air (Air-Exp), and in the step after the heat treatment (Air-HT), Y was oxidized and only HCl is formed, but the original LZC was not formed.

The Figure 1 is a graph illustrating ionic conductivity measurement results and XRD analysis results for halide-based solid electrolytes exposed to air and then heat-treated in Examples 1, 6, and 7. The ionic conductivity and XRD analysis were conducted in the step before being exposed to air (Pristine), the step after being exposed to air (Air-Exp), and the step after heat treatment (Air-HT), respectively.

Referring to The Figure 1, in Example 1 (LIC), it was confirmed that the ionic conductivity of the step after heat treatment (Air-HT) is the same as the ionic conductivity of the step before being exposed to air (Pristine), and the degree of recovery of the ionic conductivity is 100%. In addition, it could be seen that the XRD analysis result of the step after heat treatment (Air-HT) was also almost the same as the ionic conductivity of the step before being exposed to air (Pristine), so the internal structure of the LIC was recovered to its original material by the heat treatment.

On the other hand, in Example 6 (LZC) and Example 7 (LYC), it could be seen that, when being exposed to moisture, not only simple hydrates such as the LIC, but also the LiCl and other by-products are formed, and these reactions are irreversible reactions and difficult to recover.

Hereinabove, although the present invention has been described by way of limited embodiments and drawings, the present invention is not limited thereto, but may be variously modified and altered by those skilled in the art to which the present invention pertains within the equivalent scope of the technical spirit the present invention and the claims to be described below. Having now fully described this invention, it will be understood by those of ordinary skill in the art that it can be performed within a wide equivalent range of parameters without affecting the scope of the invention or any embodiment thereof.

## Claims

1. A method for renewing a halide-based solid electrolyte, comprising:

   (S1) providing a halide-based solid electrolyte that has been exposed to air; and
   (S2) heat-treating the halide-based solid electrolyte from (S1) to provide a renewed halide-based solid electrolyte.

2. The method of claim 1, wherein the heat treatment in (S2) is performed at a temperature of 200°C to 400°C.

3. The method of claim 1, wherein the heat treatment in (S2) is performed in air.

4. The method of claim 1, wherein the halide-based solid electrolyte is a lithium halide-based solid electrolyte.

5. The method of claim 4, wherein the lithium halide-based solid electrolyte includes at least one selected from the group consisting of $Li_3InCl_6$, $Li_2ZrCl_6$, and $Li_3YCl_6$.

6. The method of claim 1, wherein the method is for renewing an ionic conductivity.

7. The method of claim 1, wherein, after the heat treatment, the ionic conductivity of the halide-based solid electrolyte is recovered to 90% to 100% compared to before being exposed to the air.

[Figure 1]

## INTERNATIONAL SEARCH REPORT

| International application No. |
| --- |
| **PCT/KR2024/011762** |

| | |
| --- | --- |
| **A. CLASSIFICATION OF SUBJECT MATTER** | |
| **H01M 10/0562**(2010.01)i; **H01M 10/42**(2006.01)i; **H01M 10/052**(2010.01)i; **C01G 15/00**(2006.01)i; **C01G 25/04**(2006.01)i | |
| According to International Patent Classification (IPC) or to both national classification and IPC | |

| **B. FIELDS SEARCHED** |
| --- |
| Minimum documentation searched (classification system followed by classification symbols) |
| H01M 10/0562(2010.01); C01G 25/00(2006.01); H01B 1/06(2006.01); H01B 1/10(2006.01); H01B 13/00(2006.01); H01M 4/62(2006.01); H01M 8/02(2006.01); H01M 8/04(2006.01) |
| Documentation searched other than minimum documentation to the extent that such documents are included in the fields searched |
| Korean utility models and applications for utility models: IPC as above<br>Japanese utility models and applications for utility models: IPC as above |
| Electronic data base consulted during the international search (name of data base and, where practicable, search terms used) |
| eKOMPASS (KIPO internal) & keywords: 할라이드계 고체 전해질(halide based solid electrolyte), 수분(water content), 열처리(heating), 공기(air), 이온 전도도(ion conductivity), 재생(recovery) |

**C. DOCUMENTS CONSIDERED TO BE RELEVANT**

| Category* | Citation of document, with indication, where appropriate, of the relevant passages | Relevant to claim No. |
| --- | --- | --- |
| X | CN 111509222 A (CHINA AUTOMOTIVE BATTERY RESEARCH INSTITUTE CO., LTD. et al.) 07 August 2020 (2020-08-07)<br>See paragraphs [0002]-[0008], [0013], [0025], [0027], [0049], [0052], [0069] and [0070]; and figure 2. | 1-7 |
| A | JP 2015-050161 A (TOYOTA MOTOR CORP.) 16 March 2015 (2015-03-16)<br>See abstract; claim 1; and paragraph [0033]. | 1-7 |
| A | CN 112591793 A (UNIVERSITY OF SCIENCE AND TECHNOLOGY OF CHINA) 02 April 2021 (2021-04-02)<br>See abstract; claims 1-9; and paragraph [0047]. | 1-7 |
| A | JP 2015-018726 A (TOYOTA MOTOR CORP.) 29 January 2015 (2015-01-29)<br>See abstract; claim 1; and paragraph [0017]. | 1-7 |
| A | JP 2005-302666 A (TOYOTA MOTOR CORP.) 27 October 2005 (2005-10-27)<br>See abstract; and claim 1. | 1-7 |

| ☐ Further documents are listed in the continuation of Box C. | ☑ See patent family annex. |
| --- | --- |

| | | | |
| --- | --- | --- | --- |
| \* | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **19 November 2024** | **20 November 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.

**PCT/KR2024/011762**

| Patent document cited in search report | | | Publication date (day/month/year) | Patent family member(s) | | | Publication date (day/month/year) |
|---|---|---|---|---|---|---|---|
| CN | 111509222 | A | 07 August 2020 | None | | | |
| JP | 2015-050161 | A | 16 March 2015 | None | | | |
| CN | 112591793 | A | 02 April 2021 | CN | 112591793 | B | 06 September 2022 |
| JP | 2015-018726 | A | 29 January 2015 | None | | | |
| JP | 2005-302666 | A | 27 October 2005 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63518260
- US 46116623
- KR 1020240105579
- JP 2013219017 A